# EUROPÄISCHE PATENTSCHRIFT

(11) **EP 2 234 832 B1**
(45) Veröffentlichungstag und Bekanntmachung des Hinweises auf die Patenterteilung: **27.02.2013**
(21) Anmeldenummer: 08863071.0
(22) Anmeldetag: 10.11.2008
(51) Int. Cl.: B60K 6/48, B60K 6/365, B60K 6/543, B60K 6/547, F16H 3/66

(54) **ANTRIEBSSTRANGMODUL UND ANTRIEBSSTRANG FÜR EIN KRAFTFAHRZEUG**
DRIVE TRAIN MODULE AND DRIVE TRAIN FOR A MOTOR VEHICLE
MODULE POUR CHAÎNE CINÉMATIQUE ET CHAÎNE CINÉMATIQUE POUR VÉHICULE AUTOMOBILE

(30) Priorität: 18.12.2007 DE 102007060947
(43) Veröffentlichungstag der Anmeldung: 06.10.2010
(73) Patentinhaber: Robert Bosch GmbH, 70442 Stuttgart (DE)
(72) Erfinder: SCHULER, Ralf, 73728 Esslingen (DE); TELLERMANN, Uwe, 70499 Stuttgart-Weilimdorf (DE); SCHMOLL GENANNT EISENWERTH, Kaspar, 74343 Sachsenheim (DE)
(86) Internationale Anmeldenummer: PCT/EP2008/065226
(87) Internationale Veröffentlichungsnummer: WO 2009/077262

(56) Entgegenhaltungen:
- EP-A1- 1 318 285
- WO-A1-03/059674
- DE-A1- 10 116 989
- US-A1- 2007 049 441

## Beschreibung

### STAND DER TECHNIK

Die vorliegende Erfindung betrifft ein Antriebsstrangmodul und einen Antriebsstrang für ein Kraftfahrzeug, sowie ferner ein Kraftfahrzeug mit einem derartigen Antriebsstrang.

Der Antriebsstrang konventionell angetriebener Kraftfahrzeuge umfasst typischerweise eine Brennkraftmaschine, die an einer Kurbelwelle durch Verbrennen von Kraftstoff gewonnene mechanische Leistung bereitstellt, und ein Fahrzeuggetriebe, das die Drehzahl der Kurbelwelle auf die zur Bewegung der Räder benötigte Antriebsdrehzahl übersetzt und manuell oder automatisch zwischen unterschiedlichen Übersetzungsverhältnissen umschaltbar ist. Drehzahlunterschiede beim Anfahren und während eines Schaltvorgangs werden durch Reibkupplungen bzw. - typischerweise bei Automatikgetrieben vorhandene - durch Drehmomentwandler ausgeglichen, die als weitere Bestandteile im Antriebsstrangs enthalten-sind.

Sogenannte parallele Hybridantriebe erweitern den konventionellen Antriebsstrang um eine elektrische Maschine, die entweder fest mit der Getriebeeingangswelle verbunden ist (P1-Hybrid) oder über eine - zusätzlich zu einem am Getriebe vorgesehenen Kuppelelement - im Antriebsstrang vorgeschaltete Kupplung mit der Brennkraftmaschine verbunden werden kann (P2-Hybrid). Eine geeignete Steuervorrichtung steuert im P2-Hybrid die zusätzliche Kupplung z.B. so, dass in ausgewählten Fahrsituationen auch ein rein elektrisches Fahren oder rein elektrisches Bremsen bei stillstehender und durch die geöffnete zusätzliche Kupplung von der elektrischen Maschine abgekoppelten Brennkraftmaschine möglich ist. Die zusätzliche Kupplung wird dann wieder geschlossen, wenn die Brennkraftmaschine wieder gestartet werden soll.

Da Hybridantriebe im Vergleich zu konventionellen Kraftfahrzeugantrieben ein beträchtliches Potenzial zur Reduzierung des Kraftstoffverbrauchs wie auch zur Leistungssteigerung insbesondere im niedrigen Drehzahlbereich aufweisen, erscheint es wünschenswert, eine Vielzahl unterschiedlicher Kraftfahrzeuge mit derartigen Antrieben auszurüsten. Um Entwicklungs- und Herstellungskosten möglichst niedrig zu halten, versucht man z.B. ein Kraftfahrzeug mit Hybridantrieb auf der Grundlage eines existierenden Fahrzeugtyps mit konventionellem Antrieb zu entwickeln und die dabei notwendigen konstruktiven Veränderungen möglichst gering zu halten.

US 2007/049441 A1 beschreibt Beispielweise ein Antriebsstrangmodul für ein Kraftfahrzeug mit einer Brennkraftmaschine und einem Fahrzeuggetriebe, wobei das Antriebsstrangmodul umfasst: ein Eingangsplanetengetriebe mit einer ersten, zweiten und dritten Eingangsplanetengetriebewelle, wobei die erste Eingangsplanetengetriebewelle zur drehfesten Verbindung mit einer Kurbelwelle der Brennkraftmaschine ausgebildet ist; ein Ausgangsplanetengetriebe mit einer ersten, zweiten und dritten Ausgangsplanetengetriebewelle, wobei die erste Ausgangsplanetengetriebewelle zur drehfesten Verbindung mit einer Eingangswelle des Fahrzeuggetriebes ausgebildet ist und die zweite Ausgangsplanetengetriebewelle drehfest mit der zweiten Eingangsplanetengetriebewelle verbunden ist.

Um jedoch in den konventionellen Antriebsstrang eines gegebenen Fahrzeugtyps eine elektrische Maschine und eine zusätzliche Reibkupplung einzufügen, um auf dieser Grundlage einen P2-Hybridantriebsstrang zu erhalten, muss im Antriebsstrang entsprechend großer Bauraum vorhanden sein oder durch aufwändige Veränderungen der übrigen Bestandteile des Antriebsstrangs geschaffen werden, was die Anwendbarkeit einer solchen Konstruktion erheblich einschränkt bzw. erhöhte Entwicklungs- und Herstellungskosten verursacht.

### VORTEILE DER ERFINDUNG

Demgemäß vorgesehen ist ein Antriebsstrangmodul für ein Kraftfahrzeug, das eine Brennkraftmaschine und ein manuell oder automatisch umschaltbaren Konventionellen Fahrzeuggetriebe umfasst. Das Antriebsstrangmodul umfasst ein Eingangsplanetengetriebe mit einer ersten, zweiten und dritten Eingangsplanetengetriebewelle, wobei die erste Eingangsplanetengetriebewelle zur drehfesten Verbindung mit einer Kurbelwelle der Brennkraftmaschine ausgebildet ist, sowie ein Ausgangsplanetengetriebe mit einer ersten, zweiten und dritten Ausgangsplanetengetriebewelle, wobei die erste Ausgangsplanetengetriebewelle zur drehfesten Verbindung mit einer Eingangswelle des Fahrzeuggetriebes ausgebildet ist. Die zweite Ausgangsplanetengetriebewelle ist drehfest mit der zweiten Eingangsplanetengetriebewelle verbunden. Weiterhin umfasst das Antriebsstrangmodul eine erste Bremse, die bei Betätigung die dritte Eingangsplanetengetriebewelle abbremst, eine zweite Bremse, die bei Betätigung die dritte Ausgangsplanetengetriebewelle abbremst, und eine elektrische Maschine, die mit der zweiten Eingangsplanetengetriebewelle und der zweiten Ausgangsplanetengetriebewelle drehfest verbunden ist.

Das erfmdungsgemäße Antriebsstrangmodul ermöglicht, in Verbindung mit einer Brennkraftmaschine und einem Fahrzeuggetriebe einen P2-Hybridantriebsstrang bereitzustellen, der gegenüber herkömmlichen, Kupplungen umfassenden P2-Hybridantriebssträngen keine funktionellen Einschränkungen aufweist und gleichzeitig einen vorteilhaft geringeren Bauraum benötigt.

Im Einzelnen ermöglicht das Eingangsplanetengetriebe in Verbindung mit der ersten Bremse, die Brennkraftmaschine trennbar an die elektrische Maschine zu koppeln: Bei betätigter erster Bremse wird die dritte Eingangsplanetengetriebewelle festgehalten, so dass die erste und die zweite Eingangsplanetengetriebewelle mit festem Übersetzungsverhältnis aneinander gekoppelt sind. Da mit der ersten Eingangsplanetengetriebewelle die Kurbelwelle der Brennkraftmaschine und mit der zweiten Eingangsplanetengetriebewelle die elektrische Maschine jeweils drehfest verbunden sind, entspricht dies einer Kopplung von Brennkraftmaschine und elektrischer Maschine. Bei unbetätigter erster Bremse hingegen kann die dritte Eingangsplanetengetriebewelle frei rotieren, wodurch die erste und zweite Eingangsplanetengetriebewelle und damit auch die Brennkraftmaschine und die elektrische Maschine voneinander entkoppelt sind.

Analog ermöglicht das Ausgangsplanetengetriebe in Verbindung mit der zweiten Bremse, die elektrische Maschine trennbar an das Fahrzeuggetriebe zu koppeln: Bei betätigter zweiter Bremse wird die dritte Ausgangsplanetengetriebewelle festgehalten, so dass die erste und die zweite Ausgangsplanetengetriebewelle mit festem Übersetzungsverhältnis aneinander gekoppelt sind. Da mit der ersten Ausgangsplanetengetriebewelle die Eingangswelle des Fahrzeuggetriebes und mit der zweiten Ausgangsplanetengetriebewelle die elektrische Maschine jeweils drehfest verbunden sind, entspricht dies einer Kopplung von elektrischer Maschine und Fahrzeuggetriebe. Bei unbetätigter erster Bremse hingegen kann die dritte Ausgangsplanetengetriebewelle frei rotieren, wodurch die erste und zweite Ausgangsplanetengetriebewelle und damit auch die elektrische Maschine und das Fahrzeuggetriebe voneinander entkoppelt sind.

Das Eingangsplanetengetriebe in Verbindung mit der ersten Bremse erfüllt daher eine Funktion analog zur Funktion der zusätzlichen Kupplung in einem herkömmlichen P2-Hybridantriebsstrang, während das Ausgangsplanetengetriebe in Verbindung mit der zweiten Bremse eine Funktion analog zur Funktion der Anfahrkupplung erfüllt. Im Gegensatz zu herkömmlichen Kupplungen ermöglichen die Planetengetriebe jedoch das Lösen und Schließen der jeweiligen Verbindung ohne Bewegung eines Bauteils in einer Richtung, die parallel zur Kurbelwelle und Eingangswelle des Fahrzeuggetriebes verläuft. Das erfindungsgemäße Antriebsstrangmodul benötigt daher einen geringeren Bauraum und besonders eine geringere Baulänge in der Hauptausdehnungsrichtung des Antriebsstrangs als ein vergleichbares herkömmliches Modul, was eine breitere Anwendung bei geringen Entwicklungs- und Herstellungskosten ermöglicht.

Ein Vorteil besteht schon in geringeren Herstellungskosten einer Kombination aus Planetengetriebe und Bremse selbst im Vergleich zu den Herstellungskosten einer herkömmlichen Kupplung wie z.B. einer Reibkupplung. Die vergleichsweise geringeren Kosten wie auch eine geringere Störanfälligkeit und bessere Wärmeableitung sind u. a. dadurch bedingt, dass eine Reibkupplung eine Vorrichtung zum Trennen und Koppeln zweier rotierender Elemente erfordert, während die Bremsen des erfindungsgemäßen Antriebsstrangmoduls in einfacher, robuster Weise unbewegt montierbar sind.

Gemäß einer bevorzugten Weiterbildung ist die erste Eingangsplanetengetriebewelle mit einem Sonnenrad des Eingangsplanetengetriebes und/oder die erste Ausgangsplanetengetriebewelle mit einem Sonnenrad des Ausgangsplanetengetriebes drehfest verbunden. Dies ermöglicht vorteilhaft, die Wellen, mit denen das Antriebsstrangmodul nach außen mit der Brennkraftmaschine bzw. dem Fahrzeuggetriebe verbunden wird, in einfacher Weise als massive, d.h. nicht hohle Wellen auszuführen.

Gemäß einer bevorzugten Weiterbildung ist die zweite Eingangsplanetengetriebewelle mit einem Hohlrad des Eingangsplanetengetriebes und die zweite Ausgangsplanetengetriebewelle mit einem Hohlrad des Ausgangsplanetengetriebes drehfest verbunden. Dies ermöglicht vorteilhaft die starre Kopplung der Hohlräder aneinander.

Vorzugsweise sind das Hohlrad des Eingangsplanetengetriebes und das Hohlrad des Ausgangsplanetengetriebes starr aneinander gekoppelt, wobei die elektrische Maschine einen Rotor umfasst, welcher an einem äußeren Umfang der Hohlräder ausgebildet ist. Durch eine derartige konzentrische Anordnung der Hohlräder mit dem Rotor - und damit der Planetengetriebe insgesamt mit der elektrischen Maschine wird eine besonders kurze Baulänge des Antriebsstrangmoduls erreicht.

Weiterhin vorzugsweise sind das Hohlrad des Eingangsplanetengetriebes und das Hohlrad des Ausgangsplanetengetriebes einstückig ausgebildet. Das heißt, die zweite Eingangsplanetengetriebewelle und die zweite Ausgangsplanetengetriebewelle sind implizit vorhanden, indem sie durch die einstückige Verbindung der Hohlräder selbst in Art einer Hohlwelle ausgebildet sind, was einen besonders einfachen Aufbau, geringen Bauraum, hohe Stabilität und schützende Kapselung des Moduls ermöglicht.

Gemäß einer bevorzugten Weiterbildung ist die dritte Eingangsplanetengetriebewelle mit einem Planetenradträger des Eingangsplanetengetriebes und/oder die dritte Ausgangsplanetengetriebewelle mit einem Planetenradträger des Ausgangsplanetengetriebes drehfest verbunden.

Gemäß einer bevorzugten Weiterbildung ist weiterhin ein Torsionsschwingungsdämpfer vorgesehen, der insbesondere mit der ersten Eingangsplanetengetriebewelle drehfest verbunden ist. Hierdurch wird ein Schutz vor Verschleiß und Vibrationen erreicht. Vorzugsweise sind die erste und zweite Bremse als Lamellen-, Keil-, Scheiben- oder Bandbremse ausgebildet. Die Verwendung herkömmlicher Bremsentechnologien ermöglicht geringe Herstellungskosten.

### ZEICHNUNGEN

Die Erfindung wird nachfolgend anhand der in den schematischen Figuren der Zeichnungen angegebenen Ausführungsbeispiele näher erläutert. Es zeigen dabei:
- Fig. 1: eine schematische Darstellung eines herkömmlichen Antriebsstrangs eines Kraftfahrzeugs mit P1-Hybridantrieb;
- Fig.2: eine schematische Darstellung eines herkömmlichen Antriebsstrangs eines Kraftfahrzeugs mit P2-Hybridantrieb;
- Fig.3: eine schematische Darstellung eines Antriebsstrangs mit einem Antriebsstrangmodul gemäß einer Ausführungsform der Erfindung; und
- Fig.4: eine konkretisierte Darstellung eines Antriebsstrangs mit einem Antriebsstrangmodul gemäß einer Ausführungsform.

### BESCHREIBUNG DER AUSFÜHRUNGSBEISPIELE

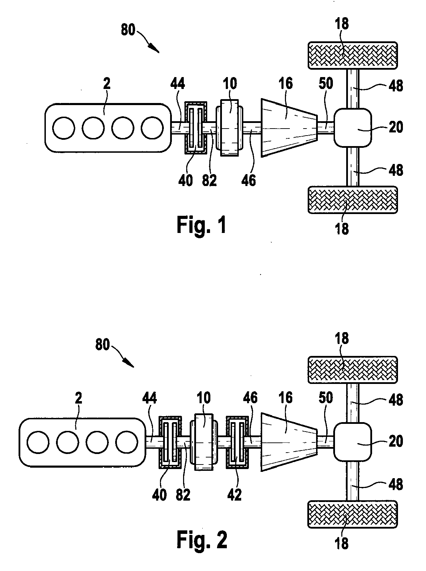

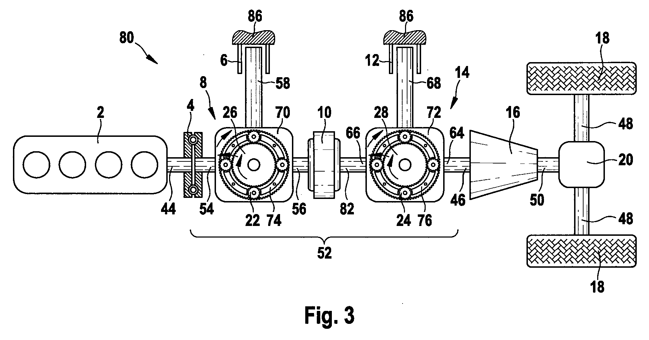

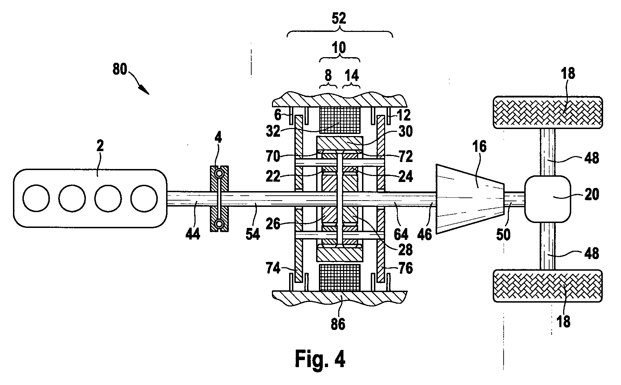

In allen Figuren der Zeichnungen sind gleiche bzw. funktionsgleiche Elemente - sofern nichts Anderes angegeben ist - mit gleichen Bezugszeichen versehen worden. Vorteile und Merkmale der in Fig. 3 und 4 gezeigten erfindungsgemäßen Ausführungsformen werden im Folgenden anhand einer Kontrastierung mit den Vergleichsbeispielen aus Fig. 1 und 2 erläutert.

Figur 1 zeigt als Vergleichsbeispiel in schematischer Darstellung einen herkömmlichen Antriebsstrangs 80 eines Kraftfahrzeugs mit P1-Hybridantrieb. Die Kurbelwelle 44 einer Brennkraftmaschine 2 ist mittels einer Reibkupplung 40 an die Welle 82 einer elektrischen Maschine 10 gekoppelt. Die Welle 82 der elektrischen Maschine 10 setzt sich in deren Innerem fort und ist auf der der Kupplung 40 abgewandten Seite fest mit einer Eingangswelle 46 eines Fahrzeuggetriebes 16 verbunden. Das Fahrzeuggetriebe 16 ist z.B. als wandlerloses Automatikgetriebe ausgebildet. Eine Ausgangswelle 50 des Fahrzeuggetriebes 16 verbindet dieses mit einem Differenzialgetriebe 20, das das Antriebsdrehmoment über paarweise vorgesehene Radachsen 48 auf ein Paar sich gegenüber liegender Räder 18 überträgt.

Figur 2 zeigt als weiteres Vergleichsbeispiel in schematischer Darstellung einen herkömmlichen Antriebsstrangs 80 eines Kraftfahrzeugs mit P2-Hybridantrieb. Wie beim P1-Hybridantrieb ist die Kurbelwelle 44 einer Brennkraftmaschine 2 mittels einer Reibkupplung 40 an eine Welle 82 einer elektrischen Maschine 10 gekoppelt. Die Welle 82 setzt sich ebenfalls im Inneren der elektrischen Maschine 10 fort und ist auf der der Kupplung 40 abgewandten Seite mit einer Eingangswelle 46 eines Fahrzeuggetriebes 16 verbunden. Im Unterschied zum P1-Hybridantrieb ist jedoch zwischen der elektrischen Maschine 10 und dem Fahrzeuggetriebe 16 ein Anfahrelement 42 in Form einer Kupplung 42 oder eines Drehmomentwandlers eingefiigt, so dass die Verbindung zwischen der elektrischen Maschine 10 und dem Fahrzeuggetriebe 16 getrennt werden kann. Das Fahrzeuggetriebe 16, das hier beispielhaft keinen Drehmomentwandler aufweist, kann als Schalt- oder Automatikgetriebe, Doppelkupplungsgetriebe (DKG) oder kontinuierlich verstellbares Getriebe (CVT) ausgeführt sein. Wie bei dem in Fig. 1 gezeigten P1-Hybridantrieb verbindet eine Ausgangswelle 50 des Fahrzeuggetriebes 16 dieses mit einem Differenzialgetriebe 20, das das Antriebsdrehmoment über paarweise vorgesehene Radachsen 48 auf ein Paar sich gegenüber liegender Räder 18 überträgt.

Figur 3 zeigt einen Antriebsstrang 80 eines Kraftfahrzeugs mit einem Antriebsstrangmodul 52 gemäß einer ersten Ausführungsform der Erfindung. Der Antriebsstrang 80 umfasst wie das in Fig. 2 gezeigte Vergleichsbeispiel eine Brennkraftmaschine 2 mit einer Kurbelwelle 44. Auf der Kurbelwelle 44 befindet sich ein Torsionsschwingungsdämpfer 4 wie z.B. ein Zweimassenschwungrad 4. Weiterhin übereinstimmend mit dem in Fig. 2 gezeigten Vergleichsbeispiel umfasst der Antriebsstrang ein Fahrzeuggetriebe 16 mit einer Eingangswelle 46 und einer Ausgangswelle 50, wobei die letztere 50 über ein Differenzialgetriebe 20 zwei Radachsen 48 und an diesen jeweils angeordnete Räder 18 antreibt. Die Zahl der gezeigten Räder 18 ist dabei rein beispielhaft gemeint; das Kraftfahrzeug kann weitere angetriebene und nicht angetriebene Räder aufweisen.

Zwischen der mit dem Torsionsschwingungsdämpfer 4 versehenen Kurbelwelle 44 der Brennkraftmaschine 2 und der Eingangswelle 46 des Fahrzeuggetriebes 16 ist im Antriebsstrang 80 das Antriebsstrangmodul 52 angeordnet, welches ein Eingangs- 8 und ein Ausgangsplanetengetriebe 14, eine jeweils zugehörige erste 6 und zweite 12 Bremse und eine zwischen dem Eingangs- 8 und Ausgangsplanetengetriebe 14 angeordnete elektrische Maschine 10 umfasst.

Das Eingangsplanetengetriebe 8 umfasst ein Sonnenrad 26, ein um das Sonnenrad 26 konzentrisch angeordnetes Hohlrad 70, sowie mindestens drei zwischen dem Sonnenrad 26 und dem Hohlrad 70 angeordnete Planetenräder 22, die von einem Planetenträger 74 getragen werden. Beispielhaft sind in der vorliegenden Ausführungsform vier Planetenräder 22 dargestellt. Eine erste 54, zweite 56 und dritte 58 Eingangsplanetengetriebewelle sind jeweils drehfest mit dem Sonnenrad 26, dem Hohlrad 70 bzw. dem Planetenträger 74 des Eingangsplanetengetriebes verbunden. Wie das Eingangsplanetengetriebe 8 umfasst auch das Ausgangsplanetengetriebe 14 ein entsprechendes Sonnenrad 28, ein um das Sonnenrad 28 konzentrisch angeordnetes Hohlrad 72, sowie mindestens drei zwischen dem Sonnenrad 28 und dem Hohlrad 72 angeordnete Planetenräder 24, die von einem Planetenträger 76 getragen werden. Eine erste 64, zweite 66 und dritte 68 Ausgangsplanetengetriebewelle sind jeweils drehfest mit dem Sonnenrad 28, dem Hohlrad 72 bzw. dem Planetenträger 76 des Ausgangsplanetengetriebes 14 verbunden. In alternativen Ausführungsformen können die inneren Elemente 26, 74, 70, 28, 76, 72 der Planetengetriebe 8, 14 den jeweiligen Planetengetriebewellen 54, 56, 58, 64, 66, 68 auf andere Weise zugeordnet sein.

Die erste 6 und zweite 12 Bremse sind jeweils an einem gegenüber der Karosserie des Kraftfahrzeugs im Wesentlichen unbeweglichen Rahmen 86 befestigt, z.B. an einem das Antriebsstrangmodul 52 einschließenden Gehäuse 86. Die erste Bremse 6 ist dabei derart an der dritten Eingangsplanetengetriebewelle 58 angeordnet, dass sie bei geschlossener erster Bremse 6 die dritte Eingangsplanetengetriebewelle 58 gegenüber dem Rahmen 86 festhält und bei geöffneter erster Bremse 6 eine freie Rotation der dritten Eingangsplanetengetriebewelle 58 zulässt. In ähnlicher Weise ist die zweite Bremse 12 derart an der dritten Ausgangsplanetengetriebewelle 68 angeordnet, dass sie bei geschlossener zweiter Bremse 12 die dritte Ausgangsplanetengetriebewelle 68 gegenüber dem Rahmen 86 festhält und bei geöffneter zweiter Bremse 12 eine freie Rotation der dritten Ausgangsplanetengetriebewelle 68 zulässt.

Die zweite Eingangsplanetengetriebewelle 56 und die zweite Ausgangsplanetengetriebewelle 66 sind innerhalb des Antriebsstrangmoduls 52 miteinander drehfest verbunden. Auf dieser drehfesten Verbindung 56, 66 ist weiterhin auch die elektrische Maschine 10 angeordnet, z.B. indem wie schematisch gezeigt die drehfeste Verbindung 56, 66 der zweiten Eingangsplanetengetriebewelle 56 und der zweiten Ausgangsplanetengetriebewelle 66 durch die Welle 82 der elektrischen Maschine 10 ausgebildet ist. Das beschriebene Antriebsstrangmodul 52 ist zwischen dem Torsionsschwingungsdämpfer 4 und dem Fahrzeuggetriebe 16 in den Antriebsstrang 80 des Kraftfahrzeugs eingefügt, wobei einerseits die Kurbelwelle 44 der Brennkraftmaschine 2 mit der ersten Eingangsplanetengetriebewelle 54 und andererseits die Eingangswelle 46 des Fahrzeuggetriebes 16 mit der ersten Ausgangsplanetengetriebewelle 64 drehfest verbunden sind.

Der in dieser Weise aufgebaute Antriebsstrang 80 ermöglicht in Abhängigkeit vom Betätigungsstatus der Bremsen 6, 12 die hauptsächlichen Betriebsarten eines Hybridantriebs, d.h. rein elektrisches Fahren, Fahren ausschließlich mit der Brennkraftmaschine 2, hybridisches Fahren mit elektrischer Maschine 10 und Brennkraftmaschine 2, freies Rollen und elektrisches Bremsen, bei dem Bewegungsenergie rückgewonnen ("rekuperiert") wird.

Im Betrieb ist z.B. beim elektrischen Fahren die erste Bremse 6 geöffnet und die zweite Bremse 12 geschlossen. Damit sind die Freiheitsgrade der Brennkraftmaschine 2 und der elektrischen Maschine 10 vollständig entkoppelt. Die Brennkraftmaschine 2 braucht somit nicht von der elektrischen Maschine 10 mitgeschleppt zu werden. Die folgende Tabelle zeigt eine Übersicht der Bremsen 6, 12, die zum Erreichen eines bestimmten Fahrzustands geöffnet bzw. geschlossen werden.

| **Erste Bremse (6)** | **Zweite Bremse (12)** | **Betriebszustand** |
|---|---|---|
| Zu | Zu | Verbrennerisches/hybridisches Fahren |
| Zu | Auf | Elektrizitätserzeugung im Stand |
| Auf | Zu | Elektrisches Fahren/Rückgewinnen |
| Auf | Auf | Freies Rollen (Segelbetrieb) |

Ein Anfahrelement wie die in Fig. 2 gezeigte Kupplung 42 ist nicht erforderlich, da die elektrische Maschine 10 keine Mindestdrehzahl besitzt und aus dem Stand ihr maximales Drehmoment abgeben kann. Dies ermöglicht es, das Kraftfahrzeug im rein elektrischen Betriebszustand aus dem Stand anfahren zu lassen. Es ist weiterhin auch möglich, das Kraftfahrzeug bei laufender Brennkraftmaschine 2 anfahren zu lassen, indem eine geeignete (nicht gezeigte) Steuervorrichtung die erste 6 und zweite 12 Bremse entsprechend ansteuert. Während des elektrischen Fahrens kann der Verbrennungsmotor 2 durch Schließen der ersten Bremse 6 gestartet werden. Er wird so von der rotierenden elektrischen Maschine 10 angeschleppt, bis er eine Drehzahl erreicht hat, die das Zünden des Kraftstoffs erlaubt. Ein unerwünschter Einfluss des Starts der Brennkraftmaschine 2 auf das auf die Räder 18 übertragene Drehmoment kann durch vollständiges oder teilweises Öffnen der zweiten Bremse 12 vermieden werden.

Beim Fähren ausschließlich mit der Brennkraftmaschine 2 werden beide Bremsen 6, 12 geschlossen, wodurch zwischen der Brennkraftmaschine 2 und dem Fahrzeuggetriebe eine feste Verbindung bei konstantem Übersetzungsverhältnis entsteht. Das Anfahren aus dem Stand kann ebenfalls mit der Brennkraftmaschine 2 realisiert werden, indem zunächst die erste Bremse 6 oder auch beide Bremsen 6, 12 geöffnet werden, so dass die Brennkraftmaschine 2 im Leerlauf dreht. Durch allmähliches, schlupfendes Schließen der ersten 6 und zweiten 12 Bremse lässt sich ein gewünschtes Anfahrdrehmoment an der Eingangswelle 46 des Fahrzeuggetriebes 16 einstellen.

Beim hybridischen Fahren sowohl mit der elektrischen 10 als auch der Brennkraftmaschine 2 ermöglichen eine geschlossene erste 6 und zweite 12 Bremse das Zusammenwirken der beiden Antriebsaggregate 2, 10, die bei konstantem Übersetzungsverhältnis über das Eingangsplanetengetriebe 8 verbunden sind. Beim Rekuperieren ist die erste Bremse 6 geöffnet und die zweite Bremse 12 geschlossen, um die gesamte über die Räder 18 und das Fahrzeuggetriebe 16 aufgenommene mechanische Leistung von der elektrischen Maschine 10 in elektrische Leistung umwandeln und in eine nicht gezeigte Batterie einspeisen zu können. Es geht keine Leistung durch Mitschleppen der Brennkraftmaschine 2 verloren. Ein Laden der Batterie bei Stillstand des Fahrzeugs schließlich ist bei geschlossener erster Bremse 6 und geöffneter zweiter Bremse 12 möglich.

Figur 4 zeigt in schematischer, konkretisierter Darstellung einen Antriebsstrangs 80 mit einem Antriebsstrangmodul 52 gemäß einer Ausführungsform, die insbesondere eine konkrete geometrische Anordnung der Bestandteile des Antriebsstrangmoduls 52 verdeutlicht. Der Antriebsstrang 80 umfasst wie die Ausführungsform aus Fig. 3 und das in Fig. 2 gezeigte Vergleichsbeispiel eine Brennkraftmaschine 2 mit einer Kurbelwelle 44, auf der sich ebenfalls ein Torsionsschwingungsdämpfer 4 befindet. Weiterhin übereinstimmend mit Fig. 2 und 3 umfasst der Antriebsstrang ein Fahrzeuggetriebe 16 mit einer Eingangswelle 46 und einer Ausgangswelle 50, die über ein Differenzialgetriebe 20 zwei Räder 18 antreibt.

Das Antriebsstrangmodul 52 ist in einem kompakten Gehäuse 86 gekapselt, das sowohl das Eingangsplanetengetriebe 8 und das Ausgangsplanetengetriebe 14 als auch die zugehörige erste 6 und zweite Bremse 12 als auch die elektrische Maschine 10 enthält. Dabei ist das Eingangsplanetengetriebe 8, das ein Sonnenrad 26, Planetenräder 22, einen Planetenträger 74 und ein Hohlrad 70 umfasst, unmittelbar neben dem spiegelsymmetrisch ausgeführten Ausgangsplanetengetriebe 14 angeordnet, das ebenfalls ein Sonnenrad 28, Planetenräder 24, einen Planetenträger 76 und ein Hohlrad 72 umfasst. Die Hohlräder 70, 72 der beiden Planetengetriebe 8, 14 sind als ein einstückiges Bauteil miteinander verbunden. Eine erste Eingangsplanetengetriebewelle 54 verbindet das Sonnenrad 26 des Eingangsplanetengetriebes 8 mit der Kurbelwelle 44, während eine erste Ausgangsplanetengetriebewelle 64 das Sonnenrad 28 des Ausgangsplanetengetriebes 14 mit der Eingangswelle 46 des Fahrzeuggetriebes 16 verbindet.

Die einen Stator 32 und einen Rotor 30 aufweisende elektrische Maschine ist konzentrisch mit den beiden benachbarten Planetengetrieben 8, 14 ausgebildet, wobei der Rotor 30 direkt auf der Außenseite des die Hohlräder 70, 72 bildenden einstückigen Bauteils vorgesehen ist. Das gezeigte Antriebstrangmodul 52, das wahlweise auch den Torsionsschwingungsdämpfer 4 mit umfassen kann, zeichnet sich daher durch eine äußerst kleine Baugröße und insbesondere durch eine äußerst kurze Baulänge in Richtung des Kraftflusses aus. Es ermöglicht daher eine breite Anwendung zur Konstruktion von Hybridantrieben auf der Grundlage existierender konventioneller Antriebsstränge, insbesondere da durch entfallende Anfahrkupplungen oder Drehmomentwandler freiwerdender Bauraum für ein derartiges kompaktes Antriebsstrangmodul nutzbar wird.

## Patentansprüche

1. Antriebsstrangmodul (52) für ein Kraftfahrzeug mit einer Brennkraftmaschine (2) und einem manuell oder automatisch Umschaltbaren Konventionellen Fahrzeuggetriebe (16), wobei das Antriebsstrangmodul (52) umfasst:
ein Eingangsplanetengetriebe (8) mit einer ersten (54), zweiten (56) und dritten (58) Eingangsplanetengetriebewelle, wobei die erste Eingangsplanetengetriebewelle (54) zur drehfesten Verbindung mit einer Kurbelwelle (44) der Brennkraftmaschine (2) ausgebildet ist;
- ein Ausgangsplanetengetriebe (14) mit einer ersten (64), zweiten (66) und dritten (68) Ausgangsplanetengetriebewelle, wobei die erste Ausgangsplanetengetriebewelle (64) zur drehfesten Verbindung mit einer Eingangswelle (46) des Fahrzeuggetriebes (16) ausgebildet ist und die zweite Ausgangsplanetengetriebewelle (66) drehfest mit der zweiten Eingangsplanetengetriebewelle (56) verbunden ist;
- eine erste Bremse (6), welche bei Betätigung die dritte Eingangsplanetengetriebewelle (58) abbremst;
- eine zweite Bremse (12), welche bei Betätigung die dritte Ausgangsplanetengetriebewelle (68) abbremst; und
- eine elektrischen Maschine (10), welche mit der zweiten Eingangsplanetengetriebewelle (56) und der zweiten Ausgangsplanetengetriebewelle (66) drehfest verbunden ist.

2. Antriebsstrangmodul (52) nach Anspruch 1, **dadurch gekennzeichnet, dass** die erste Eingangsplanetengetriebewelle (54) mit einem Sonnenrad (26) des Eingangsplanetengetriebes (8) und/oder die erste Ausgangsplanetengetriebewelle (64) mit einem Sonnenrad (24) des Ausgangsplanetengetriebes (14) drehfest verbunden ist.

3. Antriebsstrangmodul (52) nach einem der vorhergehenden Ansprüche, **dadurch gekennzeichnet, dass** die zweite Eingangsplanetengetriebewelle (56) mit einem Hohlrad (70) des Eingangsplanetengetriebes (8) und die zweite Ausgangsplanetengetriebewelle (66) mit einem Hohlrad (72) des Ausgangsplanetengetriebes (14) drehfest verbunden ist.

4. Antriebsstrangmodul (52) nach Anspruch 3, **dadurch gekennzeichnet, dass** das Hohlrad (70) des Eingangsplanetengetriebes (8) und das Hohlrad (72) des Ausgangsplanetengetriebes (14) starr aneinander gekoppelt sind, wobei die elektrische Maschine (10) einen Rotor (30) umfasst, welcher an einem äußeren Umfang der Hohlräder (70, 72) ausgebildet ist.

5. Antriebsstrangmodul (52) nach Anspruch 3 oder 4, **dadurch gekennzeichnet, dass** das Hohlrad (70) des Eingangsplanetengetriebes (8) und das Hohlrad (72) des Ausgangsplanetengetriebes (14) einstückig ausgebildet sind.

6. Antriebsstrangmodul (52) nach einem der vorhergehenden Ansprüche, **dadurch gekennzeichnet, dass** die dritte Eingangsplanetengetriebewelle (58) mit einem Planetenradträger (74) des Eingangsplanetengetriebes (8) und/oder die dritte Ausgangsplanetengetriebewelle (68) mit einem Planetenradträger (76) des Ausgangsplanetengetriebes (14) drehfest verbunden ist.

7. Antriebsstrangmodul (52) nach einem der vorhergehenden Ansprüche, **dadurch gekennzeichnet, dass** weiterhin ein Torsionsschwingungsdämpfer (4) vorgesehen ist, welcher insbesondere mit der ersten Eingangsplanetengetriebewelle (54) drehfest verbunden ist.

8. Antriebsstrangmodul (52) nach einem der vorhergehenden Ansprüche, **dadurch gekennzeichnet, dass** die erste (6) und zweite (12) Bremse als Lamellenbremse, Keilbremse, Scheibenbremse oder Bandbremse ausgebildet sind.

9. Antriebsstrang (80) für ein Kraftfahrzeug, mit:
- einer Brennkraftmaschine (2), welche eine Kurbelwelle (44) aufweist;
- einem Fahrzeuggetriebe (16), welche eine Eingangswelle (46) aufweist; und
- einem Antriebsstrangmodul (52) nach einem der vorhergehenden Ansprüche; wobei die erste Eingangsplanetengetriebewelle (54) drehfest mit der Kurbelwelle (44) und die erste Ausgangsplanetengetriebewelle (64) drehfest mit der Eingangswelle (46) verbunden ist.

10. Kraftfahrzeug mit einem Antriebsstrang (80) nach Anspruch 9.

## Claims

1. Drivetrain module (52) for a motor vehicle having an internal combustion engine (2) and having a manually or automatically shiftable conventional vehicle gearbox (16), wherein the drivetrain module (52) comprises:
- an input planetary gear set (8) having a first (54), a second (56) and a third (58) input planetary gear set shaft, wherein the first input planetary gear set shaft (54) is designed for rotationally conjoint connection to a crankshaft (44) of the internal combustion engine (2);
- an output planetary gear set (14) having a first (64), a second (66) and a third (68) output planetary gear set shaft, wherein the first output planetary gear set shaft (64) is designed for rotationally conjoint connection to an input shaft (46) of the vehicle gearbox (16) and the second output planetary gear set shaft (66) is rotationally conjointly connected to the second input planetary gear set shaft (56) ;
- a first brake (6) which, when actuated, brakes the third input planetary gear set shaft (58);
- a second brake (12) which, when actuated, brakes the third output planetary gear set shaft (68); and
- an electric machine (10) which is rotationally conjointly connected to the second input planetary gear set shaft (56) and to the second output planetary gear set shaft (66).

2. Drivetrain module (52) according to Claim 1, **characterized in that** the first input planetary gear set shaft (54) is rotationally conjointly connected to a sun gear (26) of the input planetary gear set (8) and/or the first output planetary gear set shaft (64) is rotationally conjointly connected to a sun gear (24) of the output planetary gear set (14).

3. Drivetrain module (52) according to one of the preceding claims, **characterized in that** the second input planetary gear set shaft (56) is rotationally conjointly connected to an internal gear (70) of the input planetary gear set (8) and the second output planetary gear set shaft (66) is rotationally conjointly connected to an internal gear (72) of the output planetary gear set (14).

4. Drivetrain module (52) according to Claim 3, **characterized in that** the internal gear (70) of the input planetary gear set (8) and the internal gear (72) of the output planetary gear set (14) are rigidly coupled to one another, wherein the electric machine (10) comprises a rotor (30) which is formed on an outer circumference of the internal gears (70, 72).

5. Drivetrain module (52) according to Claim 3 or 4, **characterized in that** the internal gear (70) of the input planetary gear set (8) and the internal gear (72) of the output planetary gear set (14) are formed in one piece.

6. Drivetrain module (52) according to one of the preceding claims, **characterized in that** the third input planetary gear set shaft (58) is rotationally conjointly connected to a planet gear carrier (74) of the input planetary gear set (8), and/or the third output planetary gear set shaft (68) is rotationally conjointly connected to a planet gear carrier (76) of the output planetary gear set (14).

7. Drivetrain module (52) according to one of the preceding claims, **characterized in that** there is also provided a torsional vibration damper (4) which is rotationally conjointly connected in particular to the first input planetary gear set shaft (54).

8. Drivetrain module (52) according to one of the preceding claims, **characterized in that** the first (6) and second (12) brakes are formed as multiplate brakes, wedge brakes, disk brakes or band brakes.

9. Drivetrain (80) for a motor vehicle, having:
- an internal combustion engine (2) which has a crankshaft (44);
- a vehicle gearbox (16) which has an input shaft (46); and
- a drivetrain module (52) according to one of the preceding claims;
wherein the first input planetary gear set shaft (54) is rotationally conjointly connected to the crankshaft (44) and the first output planetary gear set shaft (64) is rotationally conjointly connected to the input shaft (46).

10. Motor vehicle having a drivetrain (80) according to Claim 9.

## Revendications

1. Module de chaîne cinématique (52) pour un véhicule automobile comprenant un moteur à combustion interne (2) et une boîte de vitesses conventionnelle de véhicule (16), à changement de vitesse manuel ou automatique, le module de chaîne cinématique (52) comprenant :
- un engrenage planétaire d'entrée (8) avec un premier (54), deuxième (56) et troisième (58) arbre d'engrenage planétaire d'entrée, le premier arbre d'engrenage planétaire d'entrée (54) étant réalisé de manière à être connecté de manière solidaire en rotation à un vilebrequin (44) du moteur à combustion interne (2) ;
- un engrenage planétaire de sortie (14) avec un premier (64), deuxième (66) et troisième (68) arbre d'engrenage planétaire de sortie, le premier arbre d'engrenage planétaire de sortie (64) étant réalisé de manière à être connecté de manière solidaire en rotation à un arbre d'entrée (46) de la boîte de vitesses de véhicule (16), et le deuxième arbre d'engrenage planétaire de sortie (66) étant connecté de manière solidaire en rotation au deuxième arbre d'engrenage planétaire d'entrée (56) ;
- un premier frein (6), qui, lors de l'actionnement, freine le troisième arbre d'engrenage planétaire d'entrée (58) ;
- un deuxième frein (12), qui, lors de l'actionnement, freine le troisième arbre d'engrenage planétaire de sortie (68) ; et
- une machine électrique (10) qui est connectée de manière solidaire en rotation au deuxième arbre d'engrenage planétaire d'entrée (56) et au deuxième arbre d'engrenage planétaire de sortie (66).

2. Module de chaîne cinématique (52) selon la revendication 1, **caractérisé en ce que** le premier arbre d'engrenage planétaire d'entrée (54) est connecté de manière solidaire en rotation à un pignon solaire (26) de l'engrenage planétaire d'entrée (8) et/ou le premier arbre d'engrenage planétaire de sortie (64) est connecté de manière solidaire en rotation à un pignon solaire (24) de l'engrenage planétaire de sortie (14).

3. Module de chaîne cinématique (52) selon l'une quelconque des revendications précédentes, **caractérisé en ce que** le deuxième arbre d'engrenage planétaire d'entrée (56) est connecté de manière solidaire en rotation à une couronne dentée (70) de l'engrenage planétaire d'entrée (8) et le deuxième arbre d'engrenage planétaire de sortie (66) est connecté de manière solidaire en rotation à une couronne dentée (72) de l'engrenage planétaire de sortie (14).

4. Module de chaîne cinématique (52) selon la revendication 3, **caractérisé en ce que** la couronne dentée (70) de l'engrenage planétaire d'entrée (8) et la couronne dentée (72) de l'engrenage planétaire de sortie (14) sont accouplées rigidement l'une à l'autre, la machine électrique (10) comprenant un rotor (30) qui est réalisé sur une périphérie extérieure des couronnes dentées (70, 72).

5. Module de chaîne cinématique (52) selon la revendication 3 ou 4, **caractérisé en ce que** la couronne dentée (70) de l'engrenage planétaire d'entrée (8) et la couronne dentée (72) de l'engrenage planétaire de sortie (14) sont réalisées d'une seule pièce.

6. Module de chaîne cinématique (52) selon l'une quelconque des revendications précédentes, **caractérisé en ce que** le troisième arbre d'engrenage planétaire d'entrée (58) est connecté de manière solidaire en rotation à un porte-satellites (74) de l'engrenage planétaire d'entrée (8) et/ou le troisième arbre d'engrenage planétaire de sortie (68) est connecté de manière solidaire en rotation à un porte-satellites (76) de l'engrenage planétaire de sortie (14).

7. Module de chaîne cinématique (52) selon l'une quelconque des revendications précédentes, **caractérisé en ce qu'**en outre un amortisseur de vibrations torsionnelles (4) est prévu, lequel est en particulier connecté de manière solidaire en rotation au premier arbre d'engrenage planétaire d'entrée (54).

8. Module de chaîne cinématique (52) selon l'une quelconque des revendications précédentes, **caractérisé en ce que** le premier (6) et le deuxième (12) frein sont réalisés sous forme de frein à disque, de frein à coin d'écartement, de frein à disque ou de frein à ruban.

9. Chaîne cinématique (80) pour un véhicule automobile, comprenant :
- un moteur à combustion interne (2) qui présente un vilebrequin (44) ;
- une boîte de vitesses de véhicule (16) qui présente un arbre d'entrée (46) ; et
- un module de chaîne cinématique (52) selon l'une quelconque des revendications précédentes ;
le premier arbre d'engrenage planétaire d'entrée (54) étant connecté de manière solidaire en rotation au vilebrequin (44) et le premier arbre d'engrenage planétaire de sortie (64) étant connecté de manière solidaire en rotation à l'arbre d'entrée (46).

10. Véhicule automobile comprenant une chaîne cinématique (80) selon la revendication 9.
